Europäisches Patentamt

European Patent Office

Office européen des brevets

(11) Veröffentlichungsnummer: **0 425 819 A2**

# (12) EUROPÄISCHE PATENTANMELDUNG

(21) Anmeldenummer: 90118651.0

(22) Anmeldetag: 28.09.90

(51) Int. Cl.5: **F16K 1/30**

(30) Priorität: 02.11.89 DE 3936389

(43) Veröffentlichungstag der Anmeldung:
08.05.91 Patentblatt 91/19

(84) Benannte Vertragsstaaten:
**DE FR GB LU**

(71) Anmelder: **MESSER GRIESHEIM GMBH**
**Hanauer Landstrasse 330**
**W-6000 Frankfurt/Main(DE)**

(72) Erfinder: **Eschwey, Manfred, Dr.**
**Alte Kalkamerstrasse 47**
**W-4000 Düsseldorf 31(DE)**
Erfinder: **Hellmich, Jürgen**
**Homberger Landstrasse 752**
**W-6000 Frankfurt 56(DE)**
Erfinder: **Pongraz, Johann**
**Im Alten Bruch 12a**
**W-4100 Duisburg 25(DE)**

(54) Flaschenventil fur Druckbehälter mit hochtoxischem Inhalt.

(57) Übliche Flaschenventile weisen nur eine Absperreinrichtung in der Verbindungsleitung (4) zwischen den Anschlüssen (2,3) an den Druckbehälter und an den Verbraucher auf. Wenn diese Absperreinrichtung undicht wird, wird beim An- und Abklemmen von Druckbehältern mit hochtoxischem Inhalt das Bedienungspersonal gefährdet. Um diese Gefährdung auszuschließen, wird die Absperreinrichtung aus zwei hintereinandergeschalteten Absperrventilen (5,6) gebildet.

FIG. 1

EP 0 425 819 A2

# FLASCHENVENTIL FÜR DRUCKBEHÄLTER MIT HOCHTOXISCHEM INHALT

Die Erfindung betrifft ein Flaschenventil für Druckbehälter mit hochtoxischem Inhalt nach dem Oberbegriff des Anspruches 1.

Übliche Flaschenventile bestehen aus einem Ventilgehäuse mit Anschlüssen zum Einsetzen in die Gasflasche oder den Druckbehälter und zum Verbinden mit einem Verbraucher. In der im Ventilgehäuse verlaufenden Verbindung zwischen diesen beiden Anschlüssen ist die eigentliche Absperreinrichtung angeordnet, in der Regel ein durch Handrad betätigtes Ventil mit Sitzabdichtung. Wenn eine solche Absperreinrichtung durch Ausfall der Dichtfunktion des Ventilsitzes undicht wird, ist dies ohne größere Bedeutung, da beim Verbraucher weitere Absperreinrichtungen vorgesehen sind. Auch beim Abklemmen des Druckbehälters kann es in Kauf genommen werden, daß geringe Mengen des Behälterinhaltes durch den undichten Ventilsitz während des Abklemmens ins Freie gelangen.

Anders ist die Situation jedoch bei Druckbehältern mit hochtoxischem Inhalt. Hier können auch geringe Mengen ins Freie strömende toxische Gase das Bedienungspersonal gefährden.

Der Erfindung liegt daher die Aufgabe zugrunde, ein Flaschenventil für Druckbehälter mit hochtoxischem Inhalt zu schaffen, welches eine Gefährdung des Bedienungspersonals durch ausströmende toxische Gase während des An- und Abklemmens des Druckbehälters ausschließt.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Eine vorteilhafte Weiterbildung der Erfindung ist im Unteranspruch angegeben.

Durch die erfindungsgemäße Integration zweier hintereinandergeschalteter Absperrventile im Ventilgehäuse wird die Sicherheit bei Ausfall der Dichtfunktion eines Ventilsitzes erheblich verbessert, da dann die andere Sitzabdichtung die Absperrung des Behälterinhaltes übernimmt. Es ist äußerst unwahrscheinlich, daß beide Absperrventile gleichzeitig undicht werden. Nur in einem solchen unwahrscheinlichen Fall besteht noch eine Gefährdung des Bedienungspersonals.

Ein weiterer Vorteil des erfindungsgemäßen Flaschenventils besteht darin, daß es mit einem inerten Gas gespült werden kann und in der Verbindungsleitung zwischen den geschlossenen Absperrventilen eine Füllung aus inertem Gas aufrechterhalten werden kann. Diese schützt die Ventilsitze vor Korrosionsangriffen beim Abklemmen des Verbrauches. Bei üblichen Flaschenventilen besteht die Gefahr eines Korrosionsangriffes vor allem im Bereich des Gasflaschenanschlusses und im Bereich des Ventilsitzes. Er wird verursacht durch die wechselseitige Beaufschlagung dieser Oberflächen mit reaktiven bzw. korrosiven Gasen und der feuchten Umgebunsatmosphäre.

Zwei Ausführungsbeispiele der Erfindung sollen anhand der beigefügten Zeichnungen erläutert werden.

Es zeigen:

Fig.1 ein erfindungsgemäßes Flaschenventil mit Absperrventilen, die unter einem rechten Winkel einander zugeordnet sind,

Fig.2 ein erfindungsgemäßes Flaschenventil, bei dem die Absperrventile unter Ausbildung eines spitzen Winkels einander zugeordnet sind.

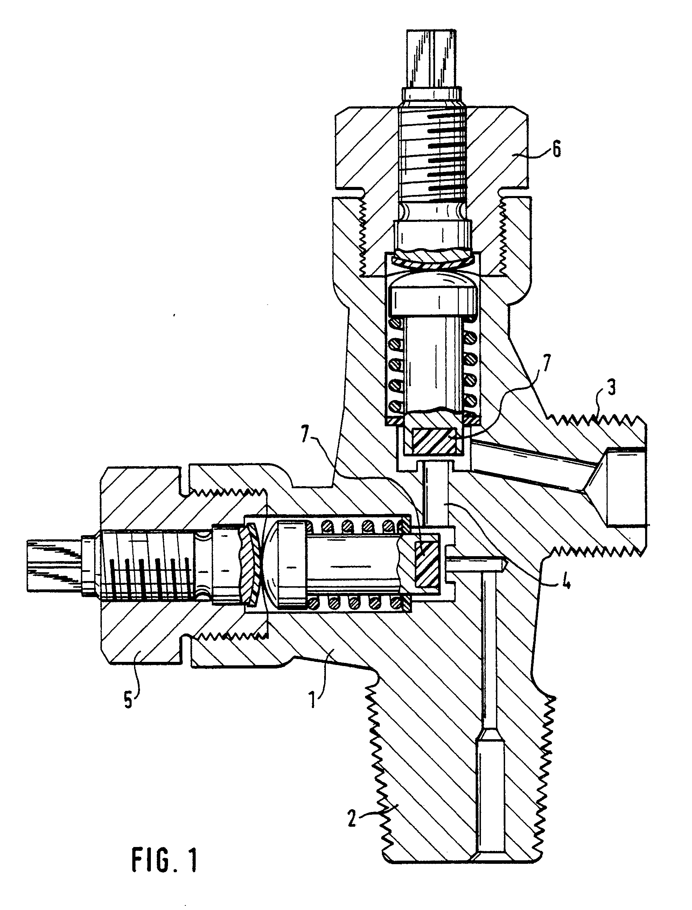

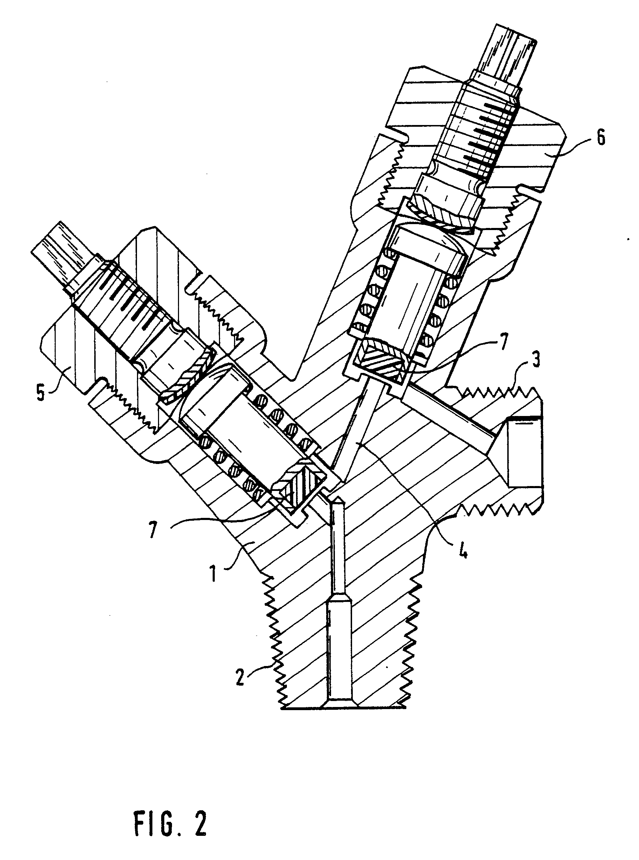

Die in den Figuren 1 und 2 dargestellten Flschenventile bestehen aus einem Ventilgehäuse 1, welches mit einem Anschluß 2 zum Einschrauben in die Gasflasche oder einen größeren Druckbehälter versehen ist. Ferner besitzen sie einen Anschluß 3 zum Verbinden mit einem Verbraucher. Die Anschlüsse 2 und 3 sind durch eine Verbindungsleitung 4 miteinander verbunden.

Gemäß der Erfindung sind in der Verbindungsleitung 4 zwei Absperrventile 5 und 6 nacheinander angeordnet. Jedes der beiden Absperrventile 5 und 6 kann unabhängig von dem anderen Ventil allein eine vollwertige Abdichtung übernehmen. Wenn daher die Dichtfunktion beispielsweise des Ventilsitzes des Ventils 5 ausfällt, genügt das Absperrventil 6 noch immer zum dichten Absperren des Behälterinhaltes. Die Absperrventile 5 und 6 entsprechen dem Stand der Technik und werden daher hier nicht näher beschrieben. Als Dichtelemente werden, wie in den Figuren 1 und 2 dargestellt, Sitzabdichtungen 7 bevorzugt. Es können jedoch auch Absperrventile mit anderen Dichtelementen, beispielsweise Nadelventile oder Membranventile, Anwendung finden.

## Ansprüche

1. Flaschenventil für Druckbehälter mit hochtoxischem Inhalt, bestehend aus einem Ventilgehäuse (1) mit Anschlüssen (2,3) zum Einsetzen in den Druckbehälter und zum Verbinden mit einem Verbraucher, sowie mit einer Absperreinrichtung in der Verbindungsleitung (4) zwischen den Anschlüssen, dadurch gekennzeichnet, daß die Absperreinrichtung aus zwei hintereinandergeschalteten Absperrventilen (5,6) gebildet wird.

2. Flaschenventil nach Anspruch 1, dadurch gekennzeichnet, daß die Absperrventile als Dichtelemente Sitzab-

dichtungen (7) aufweisen.

FIG. 1

# FIG. 2